# EUROPEAN PATENT SPECIFICATION

(11) **EP 0 723 984 B1**
(45) Date of publication and mention of the grant of the patent: **08.12.1999**
(21) Application number: 95400166.5
(22) Date of filing: 26.01.1995
(51) Int. Cl.: C08G 63/60

(54) **Biodegradable copolyester and method for preparing the same**
Biologisch abbaubare Copolyester und Verfahren zu ihrer Herstellung
Copolyestre biodégradable et procédé pour sa préparation

(43) Date of publication of application: 31.07.1996
(73) Proprietor: SAEHAN INDUSTRIES, INC., Kyungsan-city, Kyungsang buk-Do (KR); KOREA ADVANCED INSTITUTE OF SCIENCE AND TECHNOLOGY, Taejon-City (KR)
(72) Inventor: Ihm, Dae Woo, Seoul (KR); Lee, Myung Sup, Suwon-City, Kyunggi-do (KR); Jun, Hae Sang, c/o CHEIL SYNTHETICS INC., Kyungsangbuk-Do (KR); Lee, Chang Soo, Dongan-ku, Anyang-City, Kyunggi-do (KR); Jung, Sung Goo, Seoul (KR); Woo, Seong Ihl, Songpa-ku, Seoul (KR)
(74) Representative: Le Roux, Martine

(56) References cited:
- EP-A- 0 697 428
- WO-A-91/02015

## Description

The present invention relates, in general, to a biodegradable copolyester and, more particularly, to a copolyester obtained by copolymerization of an aromatic polyester having advantageously a number average molecular weight of not less than 5,000 with an aliphatic polyester biosynthesized by microorganism fermentation. Also, the present invention is concerned with an economical method for preparing the biodegradable copolyester.

Polyester, especially, polyethyleneterephthalate has good mechanical properties, chemical resistance, and durability and is useful for various fields of everyday life including substitutes for natural fibers, bottles, plastics and the like. Unlike the natural materials, the polymer, however, has a fatal weakness that it cannot be reduced into nature after use. In other words, synthetic plastics are little or by no means degraded of themselves. Disposable packaging materials, which have sharply been increased in demand, are little reclaimed relative to their tremendous consumption and thus, most of them are wasted. In addition, agricultural film is very difficult to completely regain.

As the environmental pollution caused by the plastics is issued as a serious social problem, many research and development efforts have been directed to biodegradable resins with invoking worldwide interest. In an effort of the protection of environment, degradable resins, which are degraded of themselves after discard, have recently been developed.

Degradable resins are generally grouped into biodegradable resins, which are degraded by microorganisms present in soil, and photodegradable resins, which are degraded by ultraviolet ray of day light. When the photodegradable resins are buried in soil, they are hard to degrade because they are little or by no means exposed to the sun. Accordingly, the biodegradable resins are more preferred.

Exemplary biodegradable resins include poly(hydroxyalkanoate) resins, which are synthesized by microorganisms in vivo, and polycaprolactone resins which are a kind of synthetic polymer.

Such poly(hydroxyalkanoate) resins and polycaprolactone resins are good in biodegradability, but uneconomical due to their high production cost. In addition, the applied physical properties thereof are poor and thus, are low in an aspect of practical value.

WO-A-9102015 discloses hydrodegradable polyesters obtained by transesterification of an aromatic polyester and a hydrodegradable polymer : the said transesterification being carried out in the melt.

Therefore, it is an object of the present invention to overcome the above problems encountered in prior arts and to provide a biodegradable copolyester.

It is another object of the present invention to provide a method for preparing a biodegradable copolyester with low production cost.

Based on the intensive and through study by the present inventors, the above object could advantageously be accomplished by a provision of a copolyester which is prepared by reacting an aromatic polyester having a number average molecular weight of at least 5,000 with an aliphatic polyester biosynthesized by microorganism fermentation in a solvent in the presence of an appropriate catalyst.

The above object and other advantages of the present invention will become more apparent by describing in detail the preferred embodiment of the present invention with reference to the attached drawings in which :
- Fig. 1 shows infrared spectra for polyethyleneterephthalate (PET), poly(3-hydroxybutyrate) (PHB), and a copolyester (PET/PHB copolyester) prepared in Example 1 of the present invention ;
- Fig. 2 is a ¹H nuclear magnetic resonance spectrum for the copolyester prepared in Example 1 of the present invention ; and
- Fig. 3 is a ¹³C nuclear magnetic resonance spectrum for the copolyester prepared in Example 1 of the present invention.

In accordance with the present invention, there is provided a biodegradable copolyester, represented by the following formula (I) : 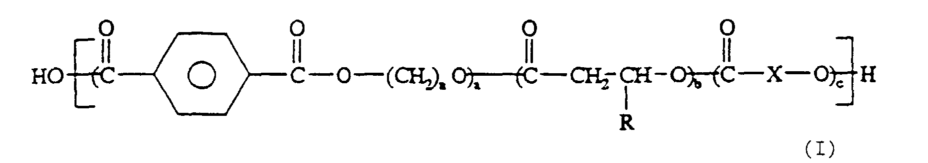 in which
n is an integer not more than 10 ;
R is -CH₃ or -C₂H₅ ;
X is 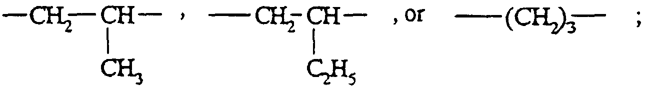 and
a is an integer compnsed between 1 and 200 ;
b is a positive integer of up to 10,000 ;
c is an integer comprised between 0 and 10,000.

As displayed in the formula I, the biodegradable copolyester of the present invention has such a combination structure that one segment having at least one one of repeating unit of alkylene terephthalate is bonded with the other segment having at least one of repeating unit of hydroxyalkanoate derivative...

The aromatic polyester used in the present invention may be prepared from aromatic compounds having at least 2 carboxylic acid groups or lower alkylesters thereof, and polyols, in a usual manner. For example, the aromatic compounds or lower alkylesters thereof and the polyols are esterified or ester-interchanged and then, subject to polycondensation under vaccum.

Preferred aromatic compounds include dicarboxylic acids such as terephthalic acid, isophthalic acid and 1,4-cyclohexanedicarboxylic acid , and acid ester compounds such as dimethylterephthalate, dibutylterephthalate, dimethylisophthalate and dibutylisophthalate. As a copolymeric component, a trifunctional acid compound such as 1,3,5-benzenetricarboxylic acid, 1,2,4-benzenetricarboxylic acid and anhydrous trimellitic acid may be used at a small amount along with the bifunctional acid compounds or lower alkylesters.

As polyols usable in the present invention, there are exemplified ethyleneglycol, 1,2-propanediol, 1,3-propanediol, 1,4-butanediol, 1,5-pentanediol, 1,6-hexanediol, and 1,4-cyclohexanedimethanol. In addition, there may be used those that are polymerized with trimethylol ethane, trimethylol propane, glycerine, pentaerythritol or tris(2-hydroxyethyl) isocyanurate, along with bifunctional glycol components, in a small degree.

It is preferred that the aromatic polyester synthesized by combination of the components has a number average molecular weight of at least 5,000 for better mechanical properties of the biodegradable copolyester. More preferably, the aromatic polyester has a number average molecular weight of 10,000 or more. For example, if the number average molecular weight is below 5,000, the resulting biodegradable copolyester is problematic in such mechanical properties as tensile strength and elongation.

Suitable aromatic polyesters are polyethyleneterephthalates and polybutyleneterephthalates, which advantageously have a number average molecular weight of not less than 5,000 (more preferably of not less than 10,000).

To express biodegradability, there is used as the other segment for the biodegradable copolyester an aliphatic polyester which is synthesized by microorganism fermentation. Poly(3-hydroxybutyrate), copoly(3-hydroxybutyrate/3-hydroxyvalerate), poly(4-hydroxybutyrate) and copoly (3-hydroxybutyrate / 4-hydroxybutyrate) are exemplified as the aliphatic polyester.

The present invention also pertains to a method for the preparation of biodegradable copolyester. For the preparation, aromatic polyester is charged in a reactor containing a solvent along with aliphatic polyester biosynthesized by microorganism fermentation and then, the reactants are stirred at 100°C or more under nitrogen atmosphere in the presence of a catalyst, to give copolyester of formula I.

Preferred solvent used in the present invention includes nitrobenzene and dimethylsulfoxide.

As a catalyst for the synthesis of the biodegradable polyester, it is preferred to use dibutyltin oxide, tin (IV) chloride, tin(IV) octoate, hexabutyl distannoxane, tributyltin methoxide, or tributyltin chloride due to their superior catalytic activity.

The preferred embodiments of the present invention will now be further described with reference to specific examples.

In the following examples, biodegradability was tested according to ASTM G21-70 and a composting method. In ASTM G21-70, a sample film was put on a solid agar medium on which a spore mixture solution of Aspergillus niger, Penicillium funiculosum, Trichoderma sp. and Pullularia pullulans was then dispersed in a predetermined amount. After two to four weeks, the propagation of the fungi was measured and graded. That is, fungi's occupying 10 % or less of the area of the sample was graded as 1, 10 to 30 % as 2, 30 to 60 % as 3, and 60 % or more as 4.

For the test according to composting method, a medium was composed as listed in the following Table 1 which shows a waste composition similar to a practical situation of Korea. The inner conditions of the medium were settled as shown in the following Table 2, and then, a sample was inserted therein. After 10 weeks, the biodegradability was graded by measuring weight reduction of the sample.

**TABLE 1**

| MATERIAL | Content (wt%) |
|---|---|
| Foodstuffs (rice cake, cabbage, pork, fish paste) | 39.8 |
| Papers (computer paper, daily paper) | 20.7 |
| Sawdust | 5.3 |
| Glasses | 7.3 |
| Plastics | 7.7 |
| Rubber | 4.5 |
| Leaf | 14.7 |

**TABLE 2**

| Condition | Content |
|---|---|
| pH | 7.0 |
| Water Content of Medium | 60.0 % |
| Carbon of Medium/Initial Nitrogen value | 23.0 |
| Aeration Speed | 100 ml/min. |
| Inner Temp. maintained | 55.0°C |

### Example 1

In a reactor equipped with a stirrer, a condenser, a gas inductor and a thermometer, 5 parts by weight of polyethyleneterephthalate with a number average molecular weight of 15,000, 5 parts by weight of poly(3-hydroxybutyrate) with a number average molecular weight of 37,000, 89,9 parts by weight of nitrobenzene and 0.1 part by weight of dibutyltin oxide were added and then, heated at 170°C for 24 hours under nitrogen atmosphere, to obtain a crude product. Thereafter, the crude product was precipitated in an excess of methanol and the precipitate was filtered. The precipitate was dissolved in a mixture solvent of orthochlorophenol/chloroform. An excess of methanol was added to precipitate purified copolyester.

The obtained copolyester was tested for physical properties, and the results are given as listed in the following Table 3.

Production of the copolyester was confirmed through infrared spectrum and nuclear magnetic resonance spectrum analyses. The following is of these spectrum analyses.

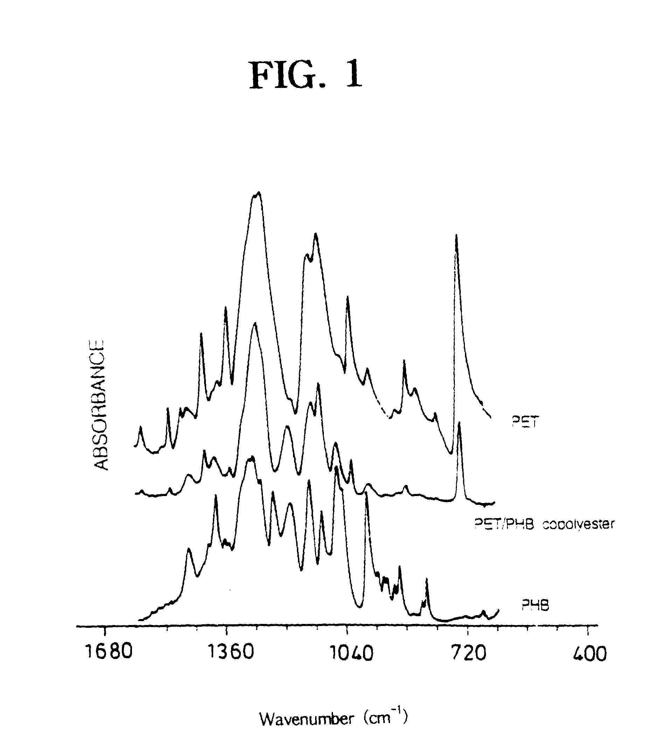

Referring to Fig. 1, there are shown infrared spectra for the copolymer of polyethyleneterephthalate and poly(3-hydroxybutyrate), polyethyleneterephthalate, and poly(3-hydroxybutyrate). As shown in this figure, the infrared spectrum for the copolymer prepared exhibits characteristic peaks of polyethyleneterephthalate, 727cm⁻¹, 1017 cm⁻¹ and 1341 cm⁻¹ and characterized peaks of poly(3-hydroxybutyrate), 1058 cm⁻¹ and 1174 cm⁻¹. As apparent from the presence of all characteristic peaks, the copolyester prepared in Example 1 has a coexistent structure of polyethyleneterephthalate and poly(3-hydroxybutyrate).

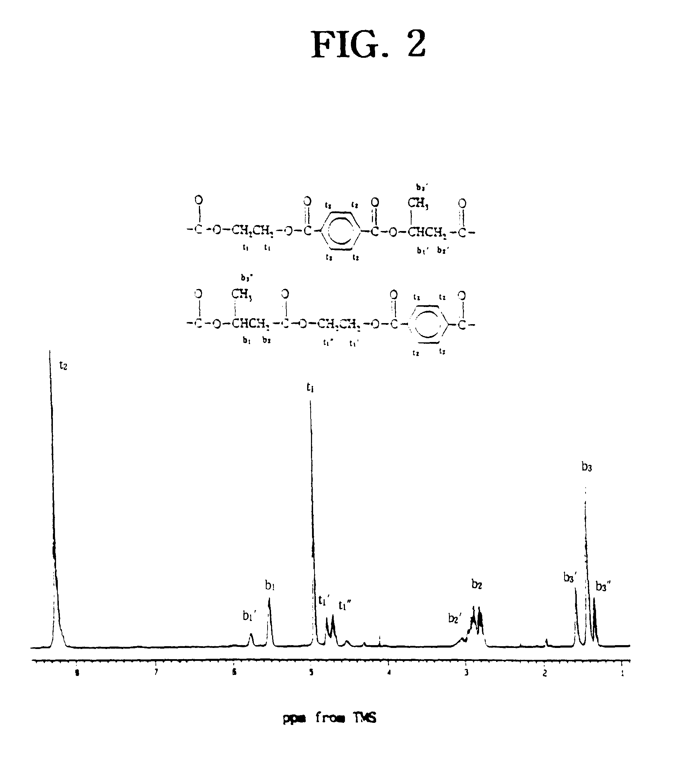

Referring to Fig. 2, there is shown a ¹H nuclear magnetic resonance spectrum for the prepared copolyester. In this spectrum, there are a peak 4.93 ppm corresponding to the hydrogens of -OCH₂ of polyethylene-terephthalate and a peak 5.51 ppm corresponding to the hydrogen of -OCH of poly(3-hydroxybutyrate). In addition to the characteristic peaks of the components, the spectrum exhibits new peaks, 4.70 ppm, 4.78 ppm, 5.75 ppm, which are correspondent to the hydrogens of the bonding portions between polyethyleneterephthalate and poly(3-hydroxybutyrate).

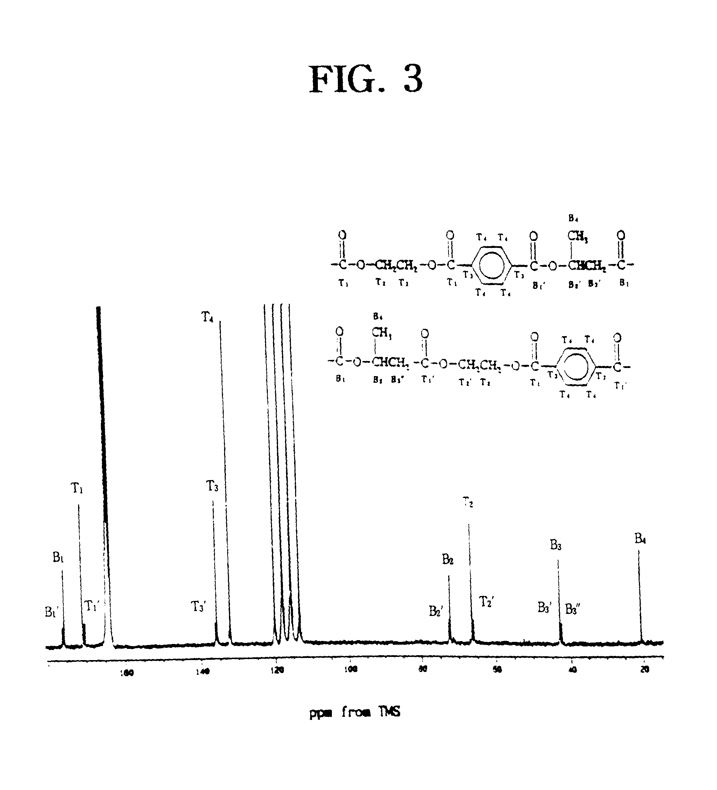

Turning now to Fig. 3, there is shown a ¹³C nuclear magnetic resonance spectrum for the prepared copolyester. As shown in this figure, the spectrum has a peak 66.3 ppm corresponding to the carbon of -OCH₂ of polyethyleneterephthalate, a peak 72.1 ppm corresponding to the carbon of -OCH of poly(3-hydroxybutyrate), a peak 170.9 ppm corresponding to the carbonyl groups of polyethyleneterephthalate, and a peak 175.7 ppm corresponding to the carbonyl groups of poly(3-hydroxybutyrate). In addition, there are exhibited new peaks which testify the bond of polyethyleneterephthalate and poly(3-hydroxybutyrate). That is, in this spectrum, peaks 65.8 ppm and 72.6 ppm correspondent to the carbons of the bond, whereas peaks 170.2 ppm and 176.5 ppm correspondent to the carbonyl groups of the bond therebetween.

### Example 2

A copolyester was prepared in a similar manner to that of Example 1, except that 3 parts by weight of polyethyleneterephthalate and 7 parts by weight of poly(3-hydroxybutyrate) were used.

The physical properties of the copolyester are given as listed in the following Table 3.

### Example 3

A copolyester was prepared in a similar manner to that of Example 1, except that 7 parts by weight of polyethyleneterephthalate and 3 parts by weight of poly(3-hydroxybutyrate) were used.

The physical properties of the copolyester are given as listed in the following Table 3.

### Example 4

A copolyester was prepared in a similar manner to that of Example 1, except that 5 parts by weight of copoly(3-hydroxybutyrate / 3-hydroxyvalerate) with a number average molecular weight of 280,000 in which a unit structure of 3-hydroxyvalerate amounts to 12 mole % of the total unit structures was used in lieu of poly(3-hydroxybutyrate).

The physical properties of the copolyester are given as listed in the following Table 3.

### Example 5

In a reactor equipped with a stirrer, a condenser, a gas inductor and a thermometer, 5 parts by weight of polybutyleneterephthalate with a number average molecular weight of 420,000, 5 parts by weight of poly(3-hydroxybutyrate) with a number average molecular weight of 350,000, 89.9 parts by weight of nitrobenzene and 0.1 part by weight of tributyltin methoxide were added and then, heated at 160°C for 24 hours under nitrogen atmosphere. Subsequent steps were carried out in the same manner as that of Example 1.

The physical properties of the copolyester are given as listed in the following Table 3.

### Example 6

A copolyester was prepared in a similar manner to that of Example 5, except that 5 parts by weight of copoly(3-hydroxybutyrate / 3-hydroxyvalerate) with a number average molecular weight of 280,000 in which a unit structure of 3-hydroxyvalerate amounts to 12 mole % of the total unit structures was used in lieu of poly(3-hydroxybutyrate).

The physical properties of the copolyester are given as listed in the following Table 3.

### Example 7

A copolyester was prepared in a similar manner to that of Example 5, except that 5 parts by weight of copoly(3-hydroxybutyrate / 4-hydroxybutyrate) with a number average molecular weight of 190,000 in which a unit structure of 4-hydroxybutyrate amounts to 10 mole % of the total unit structures was used in lieu of poly(3-hydroxybutyrate).

The physical properties of the copolyester are given as listed in the following Table 3.

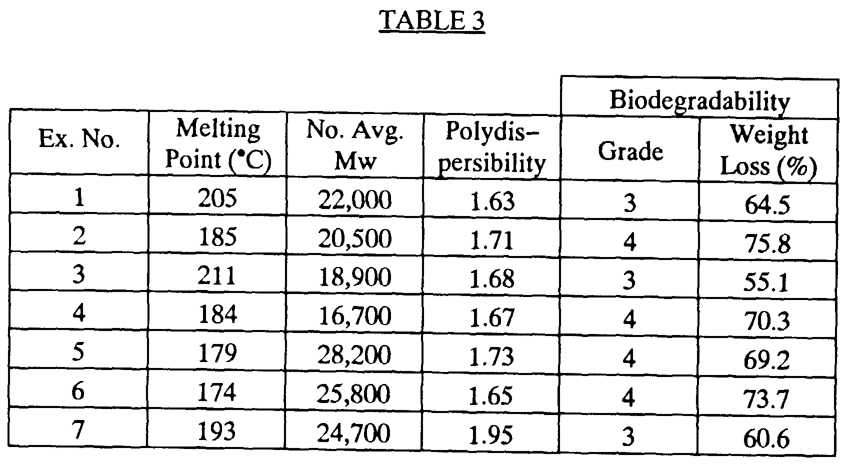

Other features, advantages and embodiments of the invention disclosed herein will be readily apparent to those exercising ordinary skill after reading the foregoing disclosures. In this regard, while specific embodiments of the invention have been described in considerable detail, variations and modifications of these embodiments can be effected without departing from the scope of the invention as described and claimed.

## Claims

1. A copolyester having a combination structure consisting of one or more repeating unit of alkyleneterephthalate and one or more repeating unit of hydroxyalkanoate, represented by the following general formula (I) : 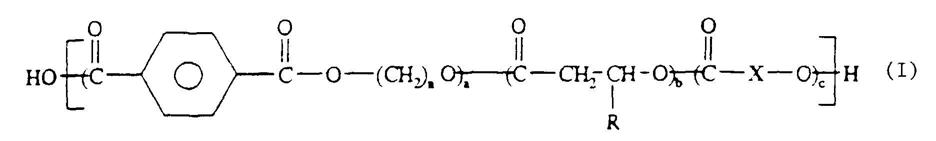 wherein
n is an integer not more than 10;
R is -CH₃ or -C₂H₅ ;
X is 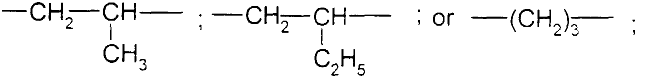
a is an integer comprised between 1 and 200 ;
b is a positive integer of up to 10,000 ;
c is an integer comprised between 0 and 10,000.

2. A method for preparing a copolyester as claimed in claim 1, which comprises reacting an aromatic polyester having repeating unit of alkyleneterephthalate with a biosynthesized by microorganism fermentation aliphatic polyester having repeating unit of hydroxyalkanoate, in a solvent at 100°C or more in the presence of a catalyst and under nitrogen atmosphere.

3. The method according to claim 2, wherein said aromatic polyester is a polyethyleneterephthalate or a polybutyleneterephthalate.

4. The method according to claim 2 or 3, wherein said aromatic polyester has a number average molecular weight of not less than 5,000.

5. The method according to any one of claims 2 to 4, wherein said aromatic polyester has a number average molecular weight of not less than 10,000.

6. The method according to any one of claims 2 to 5 wherein said aliphatic polyester is poly(3-hydroxybutyrate).

7. The method according to any one of claims 2 to 5, wherein said aliphatic polyester is copoly(3-hydroxybutyrate, 3-hydroxyvalerate).

8. The method according to any one of claims 2 to 5, wherein said aliphatic polyester is poly(3-hydroxybutyrate)-4-hydroxybutyrate).

9. A copolyester obtainable by the process according to any one of claims 2 to 8.

## Patentansprüche

1. Copolyester mit einer Verbundsstruktur aus einer oder mehreren wiederkehrenden AIkylenterephthalat-Einheiten und einer oder mehreren Hydroxyalkanoat-Einheiten der folgenden allgemeinen Formel (I): 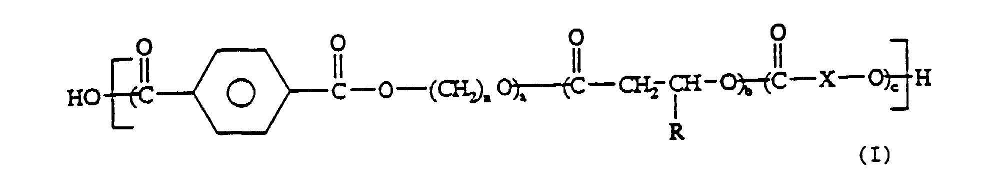 worin bedeuten:
n eine ganze Zahl von nicht mehr als 10;
R -CH₃ oder -C₂H₅;
X 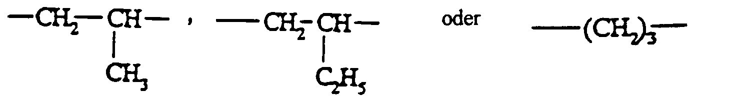
a eine ganze Zahl zwischen 1 und 200;
b eine positive ganze Zahl von bis zu 10.000 und
c eine ganze Zahl zwischen 0 und 10.000.

2. Verfahren zur Herstellung eines Copolyesters nach Anspruch 1 durch Umsetzen eines aromatischen Polyesters mit wiederkehrenden Alkylenterephthalat-Einheiten mit einem durch Mikroorganismen-Fermentation biosynthetisierten, aliphatischen Polyester mit wiederkehrenden Hydroxyalkanoat-Einheiten in einem Lösungsmittel bei 100 °C oder mehr in Gegenwart eines Katalysators unter Stickstoffatmosphäre.

3. Verfahren nach Anspruch 2, wobei der aromatische Polyester ein Polyethylenterephthalat oder Polybutylenterephthalat ist.

4. Verfahren nach Anspruch 2 oder 3, wobei der aromatische Polyester ein anzahlganitteltes Molekulargewicht von nicht weniger als 5.000 aufweist.

5. Verfahren nach einem der Ansprüche 2 bis 4, wobei der aromatische Polyester ein anzahlgemitteltes Molekulargewicht von nicht weniger als 10.000 aufweist.

6. Verfahren nach einem der Ansprüche 2 bis 5, wobei der aliphatische Polyester ein Poly(3-hydroxybutyrat) ist.

7. Verfahren nach einem der Ansprüche 2 bis 5, wobei der aliphatische Polyester an Copoly(3-hydroxybutyrat/3-hydroxyvalerat) ist.

8. Verfahren nach einem der Ansprüche 2 bis 5, wobei der aliphatische Polyester ein Copoly(3-hydroxybutyrat/4-hydroxybutyrat) ist.

9. Copolyester, erhältlich nach einem Verfahren gemäß einem der Ansprüche 2 bis 8.

## Revendications

1. Copolyester ayant une structure de combinaison consistant en une ou plusieurs unités répétées de téréphtalate d'alkylène et une ou plusieurs unités répétées d'hydroxyalcanoate, représenté par la formule générale (I) suivante : 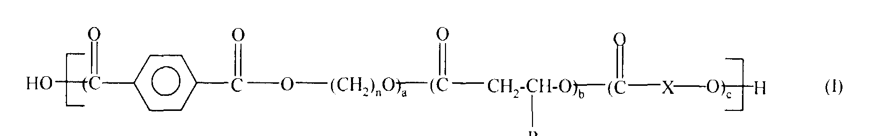 dans laquelle
n est un entier qui n'est pas supérieur à 10 ;
R est -CH₃ ou -C₂H₅ ;
X est 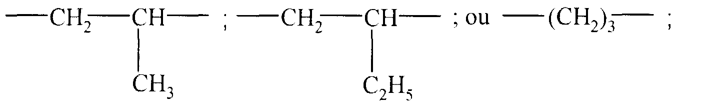
a est un entier compris entre 1 et 200 ;
b est un entier positif pouvant atteindre 10 000 ;
c est un entier compris entre 0 et 10 000.

2. Procédé pour préparer un copolyester selon la revendication 1 qui comprend la réaction d'un polyester aromatique ayant une unité répétée de téréphtalate d'alkylène avec un polyester aliphatique ayant une unité répétée d'hydroxyalcanoate biosynthétisé par fermentation par micro-organismes, dans un solvant à 100°C ou plus en présence d'un catalyseur et sous une atmosphère d'azote.

3. Procédé selon la revendication 2, dans lequel ledit polyester aromatique est un polyéthylènetéréphtalate ou un polybutylènetéréphtalate.

4. Procédé selon la revendication 2 ou 3, dans lequel ledit polyester aromatique a une masse moléculaire moyenne en nombre d'au moins 5 000.

5. Procédé selon l'une quelconque des revendications 2 à 4, dans lequel ledit polyester aromatique a une masse moléculaire moyenne en nombre d'au moins 10 000.

6. Procédé selon l'une quelconque des revendications 2 à 5, dans lequel ledit polyester aliphatique est le poly(3-hydroxybutyrate).

7. Procédé selon l'une quelconque des revendications 2 à 5, dans lequel ledit polyester aliphatique est un copolymère (3-hydroxybutyrate/3-hydroxyvalérate).

8. Procédé selon l'une quelconque des revendications 2 à 5, dans lequel ledit polyester aliphatique est un copolymère (3-hydroxybutyrate/4-hydroxybutyrate).

9. Copolyester susceptible d'être obtenu par le procédé selon l'une quelconque des revendications 2 à 8.
